# EUROPEAN PATENT SPECIFICATION

(11) **EP 3 079 869 B1**
(45) Date of publication and mention of the grant of the patent: **17.10.2018**
(21) Application number: 14870560.1
(22) Date of filing: 05.12.2014
(51) Int. Cl.: B27D 1/04, B27D 1/10, B32B 21/13, B32B 21/14, E04C 2/12, B27M 3/00, B32B 7/12, B32B 3/06

(54) **METHOD FOR MANUFACTURING A PREFABRICATED BUILDING ELEMENT**
VERFAHREN ZUR HERSTELLUNG EINES KONSTRUKTIONSFERTIGELEMENTES
PROCÉDÉ POUR FABRIQUER UN ÉLÉMENT DE CONSTRUCTION PRÉFABRIQUÉ

(30) Priority: 10.12.2013 SE 1351473
(43) Date of publication of application: 19.10.2016
(73) Proprietor: Stora Enso Oyj, 00101 Helsinki (FI)
(72) Inventor: KALLIO, Mika, FI-002230 Espoo (FI)
(74) Representative: Steinrud, Henrik
(86) International application number: PCT/IB2014/066643
(87) International publication number: WO 2015/087223

(56) References cited:
- EP-A1- 1 400 327
- WO-A1-97/37821
- WO-A1-97/38187
- WO-A1-2005/021256
- DE-A1- 3 243 497
- DE-A1- 3 243 497
- DE-U1- 20 017 058
- NL-C2- 1 021 153
- US-A- 3 687 773
- US-A1- 2007 163 194
- US-B1- 6 319 585
- US-B1- 6 444 079

## Description

The present invention relates to a method for manufacturing a prefabricated building element according to the preamble of claim 1.

The present invention further relates to a building element according to the preamble of claim 7. Such a method and building element are disclosed by document WO 2005/021256 A1. It is well known that boards of cross-laminated timber (CLT) are suitable for use as prefabricated elements in building constructions. A CLT board is a massive wood building material consisting of bonded, cross-laminated single layers called lamellas. The layers vary in thickness and can number 3, 5, 7 or more. Formaldehyde-free and environmentally friendly adhesives are normally employed for bonding. The cross structure of CLT components guarantees integral stability. The CLT board may be manufactured in large dimensions, such as, 2.95 x 16 m with a thickness up to 40 cm. This enables fast construction and minimizes the butt joints between the boards. A good performance in static and physical properties makes CLT possible to be used as a material for intermediate flooring in houses, roof structure for large halls, external walls, internal walls, ceilings and roofs. Moreover, it is possible to produce CLT elements from the CLT boards by installing insulation, exterior cladding, windows and doors in the boards, depending on the needs. With CLT boards and elements, the frame for a detached house can even be erected in just one day.
It is an object with the present invention to provide an alternative prefabricated building element which is manufactured in a more economical way in comparison to the above mentioned prefabricated building element of CLT. This new kind of building element can replace the building element of CLT.

The method according to the invention is defined in claim 1.

The building element according to the invention is defined in claim 7.

In the following, the invention will be described further with reference to the drawings, wherein
Figure 1 shows a side view of a veneer sheet.
Figure 2 shows a side view of a billet comprising layers of several veneer sheets.
Figure 3 shows a side view of a first embodiment of a building element not according to the invention comprising layers of several billets.
Figure 4 shows a building element according to the invention in three views, wherein the building element comprising layers of several billets and wherein each layer is formed by several smaller billets.
Figure 5 shows a building element according to the invention in three views, wherein the building element comprising layers of several billets and wherein each layer is formed by several smaller billets.
Figure 6 shows a building element of an external wall to a house.
Figure 7 shows a second embodiment not according to the invention where the building element comprises two billets which are mutually offset relative each other in the longitudinal direction.
Figure 8 shows the second embodiment not according to the invention where the building element comprises three billets which are mutually offset relative each other in the longitudinal direction.

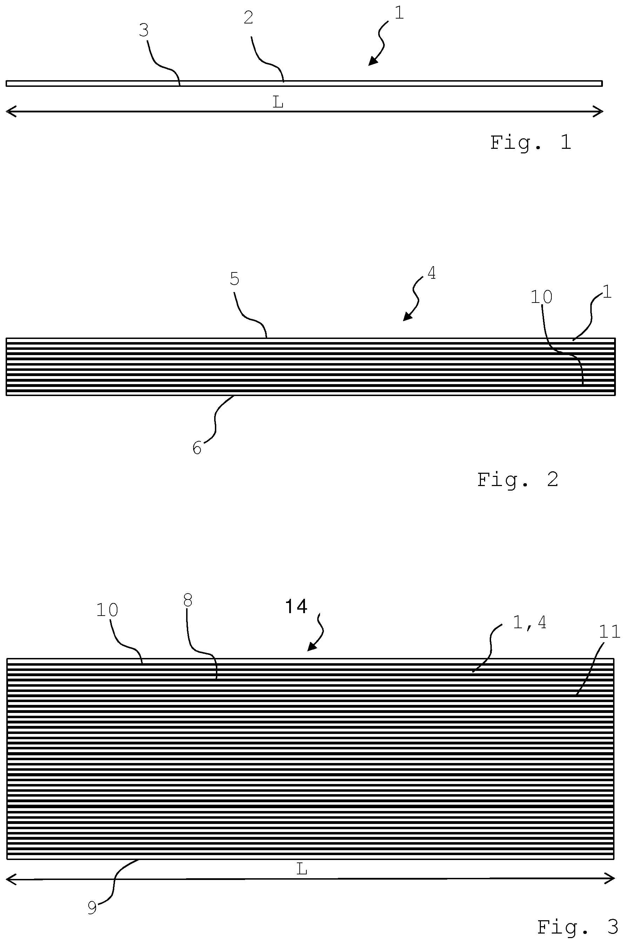

Note that the drawings in Figure 1-8 are not to scale. The present disclosure is generally directed to a method for manufacturing a prefabricated building element which is intended to be used as intermediate flooring in houses, external walls, internal walls, ceilings, roofs etc. The term "wood" is used to refer to any cellulosic material. The term "veneer" is used herein to thin pieces of material derived from wood.
In the following description of the invention the expression "cold pressing" will be frequently used. It is understood, however, that this expression is quite general and include several different methods to achieve the necessary pressure when pressing glued surfaces together. For example may "cold pressing" be performed by mechanical pressing, by using screws, by using nails or by vacuum pressing.
The method, in accordance with the invention, feeds sawed wood logs to a lathe. The lathe 2 peels the logs into veneers. The thickness of the peeled veneer is typically about 3.5 mm, but can be in the range from 2.5 mm up to 5 mm.
The veneers are then clipped in a clipping machine to a form a veneer sheet 1 of a desirable size. Additionally, smaller veneer pieces can be composed to a desirable size of the veneer sheet 1 by bonding two or more pieces together. The veneer sheet 1 may have a width (W) from about 1.5 m up to about 3.5 m and a length (L) from about 6 m up to about 20 m. The veneer sheet 1 has a first side 2 which faces upwards and a second side 3 which faces downwards and away from the first side 2.

The next step is an, optional, impregnation step where impregnation chemicals are applied onto both sides 2, 3 of the veneer sheet 1. The veneer sheet 1 is preferably transported through a spraying station where both sides 2, 3 of the veneer sheet 1 is sprayed with impregnation chemicals in order to withstand moisture. After spraying, the sprayed sides 2, 3 are rolled by at least one roller in order to further penetrate the chemicals into the veneer sheet 1 and to remove unnecessary chemicals from the veneer sheet 1. The spraying and rolling penetrates the veneer sheet 1 up to 2.5 mm, which result in a fully impregnated veneer sheet 1 with a thickness of 5 mm. The line speed of the veneer sheet 1 during the spraying step is about 1 m/s up to 10 m/s. This step may also include flame retardants chemicals together with the impregnation chemicals.

The spraying step may be replaced with a dipping step where the veneer sheet 1 is dipped into a bath comprises the impregnation chemicals. The subsequent rolling is the same as for the spraying step.

However, a major benefit with the on-line spraying and rolling is that it is possible to control the moisture content of the veneer sheet 1. It is also much faster than if the chemicals were treated with dipping or similar.

The next step is to dry the veneer sheet 1 such that a humidity level in the veneer sheet 1 is decreased to a predetermined maximum level. The temperature and time of the drying step is depending on the current humidity level in the veneer sheet 1 and the wood species.

After drying at least one side 2, 3 of the veneer sheet 1 is applied with a layer of glue 10. The glue is preferably applied on the veneer sheet 1 by a curtain spreader or similar, where the spreader is stationary and the veneer sheet 1 is moving through the spreader.

Several glued veneer sheets are then pressed together in a pre-pressing step. The first side 2 of a veneer sheet is facing against the second side 3 of an adjacent veneer sheet, such that the veneer sheets form a billet 4, which comprising a first side 5 and a second side 6 which faces away from the first side 5. The pressing time is depending on the thickness of the billet 4, the type of glue and the pressure. The billet 4 may have a thickness from 25 mm up to 100 mm.

The billet 4 is then processed in an edge trimming step, where the edges of the billet 4 are trimmed, such that the billet 4 become square formed.

The billet 4 is then treated in a hot pressing step. The hot pressing step presses billet together even further. The pressing time may be about 10-90 minutes depending on the process parameters such as billet thickness, temperature of the pressing elements, pressure etc.

The billet 4 is then transported to a gluing station. At least one side of the billet 4 is applied with a layer of glue 11. The glue 11 is preferably applied on the billet 4 by a curtain spreader or similar, where the spreader is stationary and the billet 4 is moving through the spreader.
A predetermined number of glued billets 4 are then pressed together in a cold pressing step. The first side 5 a billet is facing against the second side 5 of an adjacent billet, such that the billets form a building element 7, 14, which comprising a first side 8 and a second side 9 which faces away from the first side 8. The pressing time may be about 25-90 minutes depending on the process parameters such as the thickness of the building element 7, 14, pressure or type of glue. The building element 7, 14 may have a thickness from about 80 mm up to about 400 mm.

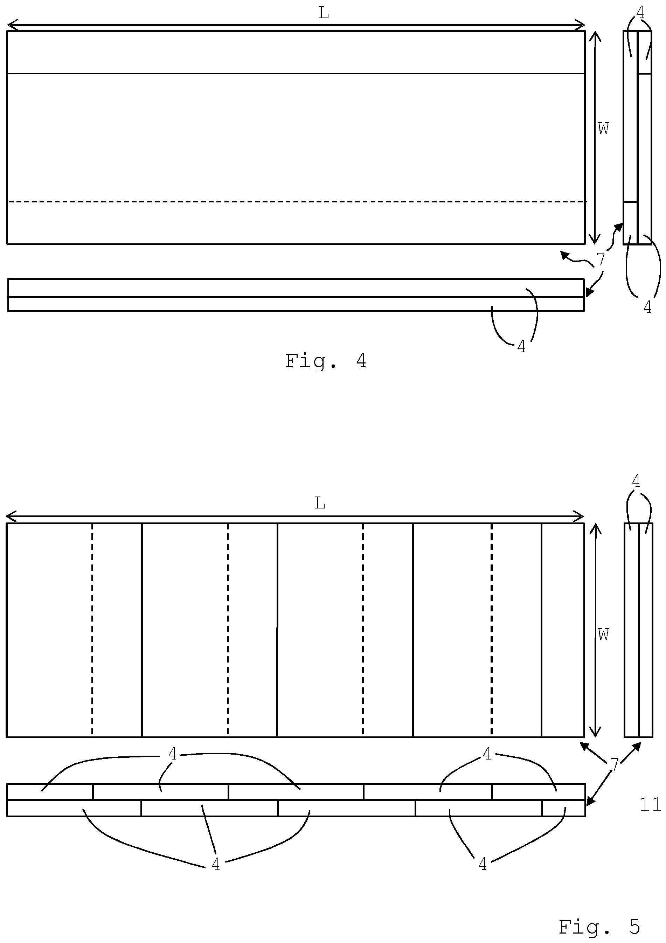

Figure 4 and figure 5 show embodiments of the building element 7 according to the invention. The building element 7 comprising two layers of billets 4, wherein each layer is formed by several billets 4 with a smaller areal surface than the areal surface of the layer and the areal surface of the building element.

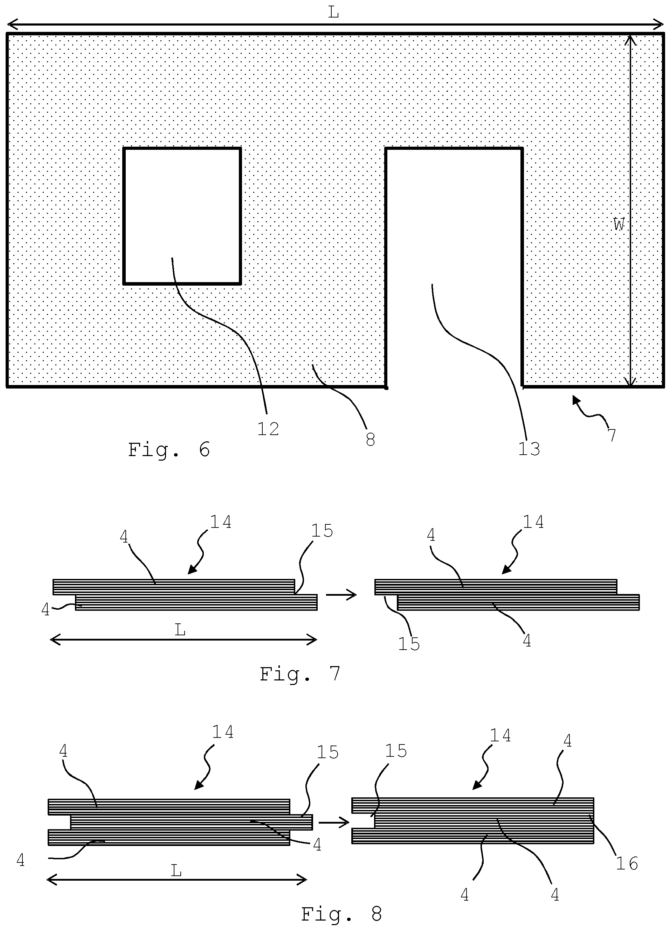

The building element 7 can then be processed in an edge trimming step, where the edges of the building element 7 are trimmed, such that the building element 7 become square formed.
The glue line 10, 11 after the pressing steps has a thickness of about 0.1-0.3 mm. If a hot press is used, the glue is normally based on melamine. If only cold presses are used the glue is normally based with polyurethane. However, both glues can be mixed in various ways to optimize the process parameters. The veneer sheets are compressed during the pressing steps. For example, a veneer sheet of 3.5 mm has after the pressing steps a thickness about 3.2 mm.
A final, optional, step is a CNC treatment to form a final shape of the building element. Figure 6 shows a CNC treated building element 7 which is an external wall 7, where recesses for a window 12 and a door 13 has been made. The dimensions of the end product can be customized quite flexible to meet customer demands, a preferred length (L) of the building element may be up to 20 m and the height (W) (i.e. the width of the building element) is up to 3.5 m.
In the foregoing, the invention has been described on the basis of embodiments according to figures 4 and 5. It is appreciated, however, that other embodiments and variants are possible within the scope of the Claims.

Figure 7 and figure 8 disclose an embodiment not according to the invention wherein at least one of the end portions of a building element 14 is equipped with a male/female member 15 for longitudinal connection to an adjacent building element 14. Moreover, the length (L) of this building element 14 is shorter in comparison to the building element 7 of the first embodiment. The length (L) and the width (W) of this building element 14 are both preferably in the range from about 1.5 m to about 3.5 m.

The veneer sheets 1 for forming a billet 4 having a much shorter length in comparison to a veneer sheet of first embodiment. This veneer sheet 1 may have length from about 1.5 m to about 3.5 m. Other dimensions of the veneer sheet 1, such as thickness and width, are equal as for a veneer sheet of the first embodiment.

All other method steps, such as clipping, trimming, impregnation, drying and gluing of the veneer sheet, are identical with the method steps for the veneer sheet of the first embodiment.

The method steps for forming of the billets 4 are also identical with the method steps of the method steps in the first embodiment, i.e. pre-pressing the glued veneer sheets to form a billet, trimming the billet and hot pressing the billet.

In accordance with the first embodiment, the billet 4 of this second embodiment is also transported to a gluing station. At least one side 5, 6 of the billet 4 is applied with a layer of glue 11. The glue 11 is preferably applied on the billet 4 by a curtain spreader or similar, where the spreader is stationary and the billet 4 is moving through the spreader.

A predetermined number of glued billets 4 are then placed together to form the building element 14. The first side 5 of the billet 4 is facing against a second side 6 of an adjacent billet 4, such that the billets 4 form the building element 14, which building element 14 comprising a first side and a second side which faces away from the first side. Moreover, at least two adjacent billets 4 are placed mutually offset relative each other in the longitudinal direction, such that a female/male member is formed at least one of the end portions of the building element 14. Figure 7 discloses a building element comprising two billets which are mutually offset relative each other in the longitudinal direction, such that a female/male member is formed at the end portions of the building element. Figure 8 discloses a building element comprising three billets 4, which are mutually offset relative each other in the longitudinal direction, such that a female/male member is formed at the end portions of the building element. The building element 14 may, of course, also have a flat end portion 16, which is shown in figure 8.

The building element 14 is then pressed together in a cold pressing step in order to press the glued billets together. The pressing time may be about 25-90 minutes depending on the process parameters such as the thickness of the building element 14, pressure or type of glue.
The building element 14 may have a thickness from about 80 mm up to about 400 mm.

The building element 14 is then processed in an edge trimming step, where the edges of the building element 14 are trimmed, such that the building element 14 become square formed.

The glue line 10, 11 after the pressing steps has a thickness of about 0.1-0.3 mm. If a hot press is used, the glue is normally based on melamine. If only cold presses are used the glue is normally based with polyurethane. However, both glues can be mixed in various ways to optimize the process parameters. The veneer sheets are compressed during the pressing steps. For example, a veneer sheet of 3.5 mm has after the pressing steps a thickness about 3.2 mm.
A final, optional, step is a CNC treatment to form a final shape of the building element 14. The dimensions of the end product can be customized quite flexible to meet customer demands.

The building element 14 of the second embodiment not according to the invention has some major benefits when it comes to transportation of the building element. For example a building element of 2.0 m can be transported in a standard container. After transportation the building elements 14 are connected together by using glue in the male/female joint between the building elements and by providing necessary pressure to the glue line by using standard screws or an external press. The building elements 14 enables erection of large external walls up to 12 m or larger as shown in figure 6.

## Claims

1. Method for manufacturing a prefabricated building element the method comprising the steps of:
- peeling a log in a lathe to form a veneer, wherein the thickness of the veneer is in the range from about 2.5 mm up to about 5 mm;
- forming the veneer to a veneer sheet (1) of a suitable size, wherein the veneer sheet (1) has a first side (2) and a second side (3);
- drying the veneer sheet (1);
- applying glue (10) on at least one side (2, 3) of the veneer sheet (1), preferably by the aid of a spreader;
- pressing a predetermined number of glued veneer sheets together to form a billet (4) in a pressing stage, wherein the billet has a first side (5) and a second side (6) which facing away from the first side;
- trimming the edges of the billet (4), such that the billet is square formed;
- hot pressing the billet (4) for 10-90 minutes;
- applying glue (11) on at least one side of the billet (4), preferably by the aid of a spreader; and
- cold pressing a predetermined number of glued billets together to form a building element (7), the building element (7) has a thickness from about 80 mm to about 400 mm;
**characterized in that** the building element (7) comprising several layers of billets (4), wherein each layer is formed by several billets (4) with a smaller areal surface than the areal surface of the layer.

2. Method according to claim 1, **characterized in that** the method further comprising a step of impregnation of the veneer sheet (1), wherein at least one impregnation chemical is applied on both sides (2, 3) of the veneer sheet (1) and that the sides (2, 3) are rolled after application to enhance the penetration of the chemical and to remove unnecessary chemicals from the veneer sheet (1),

3. Method according to claim 2, **characterized in that** the impregnation is performed by spraying, wherein the spraying station is stationary and the veneer sheet (1) is transported through the spraying station.

4. Method according to any of claims 1-3, **characterized in that** the method further comprising a step of treating the building element (7) in a CNC machine to form the final shape of the building element (7).

5. Method according to claim 4, **characterized in that** the formed building element (7) is an external wall having recesses (12, 13).

6. Method according to any of claims 1-5, **characterized in that** the method further comprising the step of placing at least two adjacent billets (4) to be mutually offset relative each other in the longitudinal direction, such that a female/male member (15) is formed at at least one of the end portions for longitudinal connection.

7. Building element (7) the building element (7) comprising several layers of billets (4) which are glued and pressed together and that each billet is formed by veneer sheets that are glued and pressed together, **characterized in that** each layer is formed by several billets (4) with a smaller areal surface than the areal surface of the layer.

8. Building element according to claim 7, **characterized in that** at least two adjacent billets (4) are mutually offset relative each other in the longitudinal direction.

## Patentansprüche

1. Verfahren zur Herstellung eines vorgefertigten Gebäudeelements, wobei das Verfahren Folgendes umfasst:
- Abschälen eines Holzstamms auf einer Drehbank, um ein Furnier zu bilden, wobei die Stärke des Furniers im Bereich von ungefähr 2,5 mm bis ungefähr 5 mm liegt;
- Formen des Furniers zu einem Furnierblatt (1) in einer geeigneten Größe, wobei das Furnierblatt (1) eine erste Seite (2) und eine zweite Seite (3) hat;
- Trocknen des Furnierblattes (1);
- Auftragen eines Klebstoffes (10) auf mindestens eine Seite (2, 3) des Furnierblattes (1), vorzugsweise mithilfe eines Spachtels;
- Zusammendrücken einer vorbestimmten Anzahl geklebter Furnierblätter, um einen Block (4) in einer Andruckphase zu formen, wobei der Block eine erste Seite (5) und eine zweite Seite (6) hat, die von der ersten Seite weg zeigt;
- Abschneiden der Kanten des Blocks (4), sodass der Block quadratisch geformt ist;
- Heißpressen des Blocks (4) für 10-90 Minuten;
- Auftragen eines Klebstoffes (11) auf mindestens eine Seite des Blocks (4), vorzugsweise mithilfe eines Spachtels; und
- Kaltpressen einer vorbestimmten Anzahl von verklebten Blöcken, um ein Gebäudeelement (7) zu formen, das Gebäudeelement (7) hat eine Stärke von ungefähr 80 mm bis ungefähr 400 mm;
**gekennzeichnet dadurch, dass** das Gebäudeelement (7) verschiedene Schichten von Blöcken (4) umfasst, wobei jede Schicht aus verschiedenen Blöcken (4) geformt ist, mit einer kleineren Oberfläche als die Oberfläche der Schicht.

2. Verfahren nach Anspruch 1, **gekennzeichnet dadurch, dass** das Verfahren ferner einen Schritt der Imprägnierung des Furnierblattes (1) umfasst, wobei mindestens eine Imprägnierchemikalie auf beiden Seiten (2, 3) des Furnierblattes (1) aufgetragen wird und die Seiten (2, 3) nach dem Auftragen gerollt werden, um das Eindringen der Chemikalie zu verstärken und unnötige Chemikalien aus dem Furnierblatt (1) zu entfernen.

3. Verfahren nach Anspruch 2, **gekennzeichnet dadurch, dass** die Imprägnierung durch Aufsprühen ausgeführt wird, wobei die Sprühstation stationär ist und das Furnierblatt (1) durch die Sprühstation transportiert wird.

4. Das Verfahren nach den Ansprüchen 1-3, **gekennzeichnet dadurch, dass** das Verfahren ferner einen Schritt der Behandlung des Gebäudeelements (7) in einer CNC-Maschine umfasst, um die endgültige Form des Gebäudeelements (7) zu bilden.

5. Das Verfahren nach Anspruch 4, **gekennzeichnet dadurch, dass** das geformte Gebäudeelement (7) eine externe Wand mit Vertiefungen (12, 13) ist.

6. Das Verfahren nach einem der Ansprüche 1-5, **gekennzeichnet dadurch, dass** das Verfahren ferner den Schritt umfasst, mindestens zwei aneinander liegende Blöcke (4) so zu positionieren, dass sie gegenseitig im Verhältnis zueinander in Längsrichtung versetzt sind, sodass ein Innen-/Außenteil (15) an mindestens einem Endteil für eine Längsverbindung geformt wird.

7. Gebäudeelement (7), wobei das Gebäudeelement (7) verschiedene Schichten von Blöcken (4) umfasst, die zusammengeklebt und gepresst sind und wobei jeder Block aus Furnierblättern geformt wird, die zusammengeklebt und zusammengepresst sind, **gekennzeichnet dadurch, dass** jede Schicht mit einer kleineren Oberfläche als die Oberfläche der Schicht durch verschiedene Blöcken (4) geformt wird.

8. Gebäudeelement nach Anspruch 7, **gekennzeichnet dadurch, dass** mindestens zwei nebeneinander liegende Blöcke (4) gegenseitig im Verhältnis zueinander in Längsrichtung versetzt sind.

## Revendications

1. Procédé de fabrication d'un élément de construction préfabriqué, le procédé comprenant les étapes :
- de déroulement d'un rondin de bois dans un tour pour former un placage, où l'épaisseur du placage est dans la plage d'environ 2,5 mm jusqu'à environ 5 mm ;
- de transformation du placage en une feuille de placage (1) d'une taille appropriée, où la feuille de placage (1) a une première face (2) et une seconde face (3) ;
- de séchage de la feuille de placage (1) ;
- d'application de colle (10) sur au moins une face (2, 3) de la feuille de placage (1), de préférence à l'aide d'un épandeur ;
- de compression d'un nombre prédéterminé de feuilles de placage encollées ensemble pour former une billette (4) dans un stade de compression, où la billette a une première face (5) et une seconde face (6) qui est opposée à la première face ;
- de rognure des bords de la billette (4), de sorte que la billette est de forme carrée ;
- de compression à chaud de la billette (4) pendant 10 à 90 minutes ;
- d'application de colle (11) sur au moins une face de la billette (4), de préférence à l'aide d'un épandeur ; et
- de compression à froid d'un nombre prédéterminé de billettes encollées ensemble pour former un élément de construction (7), l'élément de construction (7) a une épaisseur d'environ 80 mm à environ 400 mm ;
**caractérisé en ce que** l'élément de construction (7) comprend plusieurs couches de billettes (4), où chaque couche est formée de plusieurs billettes (4) avec une surface spatiale plus petite que la surface spatiale de la couche.

2. Procédé selon la revendication 1, **caractérisé en ce que** le procédé comprend en outre une étape d'imprégnation de la feuille de placage (1), ou au moins un produit chimique d'imprégnation est appliqué sur les deux faces (2, 3) de la feuille de placage (1) et **en ce que** les faces (2, 3) sont roulées après l'application pour améliorer la pénétration du produit chimique et pour enlever les produits chimiques superflus de la feuille de placage (1).

3. Procédé selon la revendication 2, **caractérisé en ce que** l'imprégnation est réalisée par pulvérisation, où un poste de pulvérisation est fixe et la feuille de placage (1) est transportée en traversant le poste de pulvérisation.

4. Procédé selon l'une quelconque des revendications 1 à 3, **caractérisé en ce que** le procédé comprend en outre une étape de traitement de l'élément de construction (7) sur une machine à commande numérique informatisée pour donner la forme finale de l'élément de construction (7).

5. Procédé selon la revendication 4, **caractérisé en ce que** l'élément de construction (7) formé est une paroi extérieur ayant des renfoncements (12, 13).

6. Procédé selon l'une quelconque des revendications 1 à 5, **caractérisé en ce que** le procédé comprend en outre l'étape de mise en place d'au moins deux billettes (4) adjacentes pour qu'elles soient mutuellement décalées l'une par rapport à l'autre dans la direction longitudinale, de sorte qu'un organe femelle/mâle (15) est formé à au moins un des segments d'extrémité pour une connexion longitudinale.

7. Élément de construction (7), l'élément de construction (7) comprenant plusieurs couches de billettes (4) qui sont collées et compressées ensemble et que chaque billette est formée par des feuilles de placage qui sont collées et compressées ensemble, **caractérisé en ce que** chaque couche est formée par plusieurs billettes (4) avec une surface spatiale plus petite que la surface spatiale de la couche.

8. Élément de construction selon la revendication 7, **caractérisé en ce qu'au** moins deux billettes (4) adjacentes sont mutuellement décalées l'une par rapport à l'autre dans la direction longitudinale.
